# EUROPEAN PATENT SPECIFICATION

(11) **EP 3 910 991 B1**
(45) Date of publication and mention of the grant of the patent: **17.08.2022**
(21) Application number: 20175089.0
(22) Date of filing: 15.05.2020
(51) Int. Cl.: H04W 24/06, H04W 76/50

(54) **PERFORMING A TEST OF AN EMERGENCY CALL (OR QUALITY MANAGEMENT FUNCTIONALITY) BASED ON A PREDEFINED TEST IDENTIFIER USED FOR INITIATING A CORRESPONDING PACKET-SWITCHED CALL BY A TEST MOBILE COMMUNICATION DEVICE REGISTERED
WITH A PRIVATE OR NON-PUBLIC MOBILE COMMUNICATION NETWORK**
DURCHFÜHRUNG EINES TESTS VON EINEM NOTRUF (ODER VON EINER QUALITÄTSVERWALTUNGSFUNKTIONALITÄT) AUF DER BASIS VON EINER VORDEFINIERTEN TESTKENNUNG, DIE ZUR INITIIERUNG EINES ENTSPRECHENDEN PAKETVERMITTELTEN ANRUFS DURCH EIN TESTMOBILKOMMUNIKATIONSGERÄT VERWENDET WIRD, WELCHES BEI EINEM PRIVATEN BZW. NICHT-ÖFFENTLICHEN NETZ REGISTRIERT IST
RÉALISATION D'UN TEST D'APPEL D'URGENCE (OU D'UNE FONCTION DE GESTION DE QUALITÉ) BASÉE SUR UNE IDENTIFICATION DE TEST PRÉDÉFINIE, LAQUELLE EST UTILISÉE, POUR L'INITIATION D'UN APPEL PAR COMMUTATION DE PAQUETS CORRESPONDANT, PAR UN DISPOSITIF DE COMMUNICATION MOBILE DE TEST, QUI EST REGISTRÉ AVEC UN RÉSEAU DE COMMUNICATION MOBILE PRIVÉ OU NON-PUBLIQUE

(43) Date of publication of application: 17.11.2021
(73) Proprietor: Deutsche Telekom AG, 53113 Bonn (DE)
(72) Inventor: BÜCHTER, Martin, 53840 Troisdorf (DE); LAUSTER, Reinhard, 3100 St. Pölten (AT); KISTOWSKI-CAMES, Dirk, 53757 Sankt Augustin (DE)
(74) Representative: Schwöbel, Thilo K.

(56) References cited:
- EP-A1- 3 462 767
- US-A1- 2016 029 197
- DEUTSCHE TELEKOM ET AL: "Addition of eCall URNs", 3GPP DRAFT; C1-161910, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Ljubljana, SLOVENIA; 20160411 - 20160415 4 April 2016 (2016-04-04), XP051078764, Retrieved from the Internet: URL:http://www.3gpp.org/ftp/tsg_ct/WG1_mm- cc-sm_ex-CN1/TSGC1_97_Ljubljana/docs/ [retrieved on 2016-04-04]
- CHARTER COMMUNICATIONS ET AL: "IMS emergency requirement for NPN", 3GPP DRAFT; S1-193482, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Reno, Nevada, USA; 20191118 - 20191122 25 November 2019 (2019-11-25), XP051831225, Retrieved from the Internet: URL:https://ftp.3gpp.org/tsg_sa/WG1_Serv/T SGS1_88_Reno/Docs/S1-193482.zip S1-193482 was 3130 22.101 CR eNPN.v04.doc [retrieved on 2019-11-25]

## Description

### BACKGROUND

The present invention relates to a method for performing a test of an emergency call system or quality management system or an emergency call functionality or quality management functionality, wherein the emergency call system or quality management system or the emergency call functionality or quality management functionality is used in the presence or at least the vicinity of both a mobile communication network being a public land mobile network and using a first mobile network code identity, and a further mobile communication network being a private or non-public network, especially a campus network, and using a second mobile network code identity.

Additionally, the present invention relates to a system for performing a test of an emergency call system or quality management system or an emergency call functionality or quality management functionality, wherein the emergency call system or quality management system or the emergency call functionality or quality management functionality is used in the presence or at least the vicinity of both a mobile communication network being a public land mobile network and using a first mobile network code identity, and a further mobile communication network being a private or non-public network, especially a campus network, and using a second -mobile network code identity.

In order to certify interoperability of implementations of emergency call or quality management functionalities, such as, e.g., eCall implementations, tests of such emergency call or quality management functionalities (especially eCall implementations or end-of-production quality checks or quality assurances) - especially conformance tests - have to be conducted, proving compliance, interoperability and essential performance criteria.

One possibility to conduct such emergency call or eCall tests is to use a radio testbed which is typically distinct from the surrounding operating radio networks or mobile communications networks. Such dedicated radio network solutions are commonly deployed by original equipment manufacturers OEMs (e.g. car makers). These networks are usually operated and run by the OEMs. Furthermore, in order to support the OEMs (e.g. car makers) to carry out the required crash tests, a reliable solution which preferably is as well applicable for quality assurance or quality management at (the end of) the production line or for periodic technical general inspections (e.g. vehicle roadworthiness tests) is necessary.

However, PLMN simulators are typically deployed for such radio testbeds are designed for laboratory use, usually having a limited dynamic range and being designed for laboratory environments, but not designed to fulfill requirements of crash test facilities. Thus there is the risk that the dynamic range might not be adequate to carry out the tests with the necessary reliability. Another drawback is that the tests are carried out against a laboratory environment and not against an operational network providing realistic and state of the art technology.

Furthermore, real life experience shows that such dedicated radio network solutions provide severe threats for the proper eCall operation, namely that a non-negligible share of incoming, seemingly operative emergency calls are actually test emergency calls, especially stemming from dedicated not sufficiently reliable radio network solutions, and, thus, hampering the operative emergency call or eCall service as such because operative emergency resources are unnecessarily used for such test emergency calls.

EP 3462767 A1 discloses a method for performing a test of an emergency call or quality management system or an emergency call or quality management functionality, wherein the emergency call or quality management system or the emergency call or quality management functionality is used with a mobile communication network, at least one mobile communication device or user equipment being connected to the mobile communication network, and the mobile communication network comprising or being associated with a plurality of public safety answering points or a plurality of public safety answering point functionalities or especially one or a plurality of quality management test call endpoint(s).

US 2016029197 A1 relates to a system for asserting support for telematics capabilities in vehicle emergency call systems. A first endpoint, such as an emergency call in-vehicle system (IVS) of a vehicle terminal, may transmit its telematics capabilities to a second endpoint, such as an emergency call answering point, over a wireless communication system.

Deutsche Telekom et al.: "Addition of eCall URNs", 3GPP DRAFT; C1-161910, 3RD GENERATION PARTNERSHIP PROJECT (3GPP), MOBILE COMPETENCE CENTRE; 650, ROUTE DES LUCIOLES; F-06912 SOPHIA-ANTIPOLIS CEDEX; FRANCE, CT WG1, Liubljana, SLOVENIA; 20160411 - 20150415, relates to new URN definitions for manually initiated eCall und automatically initiated eCall.

CHARTER COMMUNICATIONS et al.: "IMS emergency requirement for NPN", 3GPP DRAFT; S1-193482, 3RD GENERATION PARTNER-SHIP PROJECT (3GPP), MOBILE COMPETENCE CENTRE; 650, ROUTE DES LUCIOLES; F-06912 SOPHIA-ANTIPOLIS CEDEX; FRANCE, SA WG1, Reno, Nevada USA; 20191118-20191122, relates to IMS Multimedia Emergency Sessions.

### SUMMARY

An object of the present invention is to provide a technically simple, effective and especially cost effective solution for performing a test of an emergency call or quality management system or an emergency call or quality management functionality in a cost-effective manner and such that testing is able to be realized easily at different locations, and with a minimum risk of false routing of the involved test calls.

The object of the present invention is achieved by a method according to claim 1.

It is thereby advantageously possible according to the present invention to enable tests, especially for emergency calls and for eCalls initiated by in-vehicle-systems built into cars. According to the present invention, it is also advantageously possible to carry out NIS ERA GLONASS tests in countries which are outside the Russian-Federation. Furthermore, it is advantageously possible according to the present invention that a high dynamic range is provided for different realistic test cases. Furthermore, it is especially advantageous to easily realize system (or functionality) verification tests, especially for emergency call or quality management test call related functionalities, at different locations, in a cost-efficient manner and with a minimized risk for a false routing of such test calls.

Traditional emergency calls, initiated within a telecommunications network by means of using specific emergency phone numbers, such as 112 or 911, are typically routed towards a public safety answering point connected or assigned to the telecommunications network. While first generation eCall is based on Circuit Switched (CS) emergency calls (Teleservice 12), typically using an in-band modem, optimized for 2G (GSM) and 3G (UMTS) circuit-switched networks, a packet switched (PS) eCall is based and implemented on packet switched networks (e.g. 4G and 5G IP based mobile networks and in future WLAN), deploying the IP Multimedia Subsystem (IMS) emergency call framework, as standardized in 3GPP, IETF and CEN.

According to the present invention, the mobile communication network is a 4G / 5G packet switched network and the emergency call or quality management system or the emergency call or quality management functionality is configured to handle IP multimedia subsystem-based packet switched emergency calls and/or session initiation protocol based packet switched emergency calls.

According to the present invention, it is assumed that test emergency calls or test eCalls or the test of an emergency call or quality management system or an emergency call or quality management functionality is/are to be performed - by or involving at least one test mobile communication device - in the presence or at least in the vicinity of both a mobile communication network being a public land mobile network and using a first mobile network code identity, and a further mobile communication network being a private or non-public network, especially a campus network, and using a second mobile network code identity. Hence, there is the need to distinguish between such test emergency calls (or test eCalls) on the one hand, and operative emergency calls (or operative eCalls) on the other hand.

Typically, the mobile communication network comprises an access network, a core network, and one or a plurality of base station entities. Furthermore, the mobile communication network typically comprises or is at least associated with (or can access, i.e. is able to be connected to) a plurality of operative public safety answering points or a plurality of operative public safety answering point functionalities.

According to the present invention, the at least one test mobile communication device is - as much as possible - a normal mobile communication device, hence it is typically able to establish a radio link (or a packet network connection) with (or to register via) both
-- a base station entity of or associated to the access network, using the first mobile network code identity, and
-- a base station entity or a base station entity part of or related to or assigned to the further mobile communication network, using the second network code identity.
In order to perform a test of the emergency call or quality management system or the emergency call or quality management functionality, at least one test identification identifier is predefined for being used to perform the test of the emergency call or quality management system or the emergency call or quality management functionality, and the method comprises the steps of:
-- in a first step, the at least one test mobile communication device registers with the further mobile communication network, using the second network code identity,
-- in a second step, subsequent to the first step, an emergency call or quality management call is initiated or performed by the at least one test mobile communication device, thereby using the at least one test identification identifier,
-- in a third step, subsequent to the second step, the use of the at least one test identification identifier - while initiating or performing the emergency call or quality management call - is detected by the further mobile communication network.

According to the present invention, it should be assured as much as possible that a test emergency call (or test eCall) shall be handled by the further mobile communication network (and not by the mobile communication network or public land mobile network).

According to a preferred embodiment of the present invention, the first network code identity corresponds to a public land mobile network identity, and the second network code identity corresponds to at least one out of the following:
-- a public land mobile network identity,
-- an uncoordinated public land mobile network identity,
-- a network identity, NID,
-- a closed access group identity, CAG identity,
of the further mobile communication network,
wherein the further mobile communication network especially comprises a further access network and/or a further core network and/or one or a plurality of further base station entities.

Thereby, it is advantageously possible according to the present invention that the further mobile communication network can be (but need not be) a private or non-public network, especially a campus network, i.e. in any case separated from the mobile communication network being a public land mobile network at least regarding the mobile network code identity used, i.e. the first mobile network code identity differs from the second mobile network code identity used (or emitted by the respective base station entities) by the further mobile communication network.

According to the present invention the at least one test mobile communication device is configured such that the second network code identity is preferentially used compared to the use of the first network code identity. It is preferred that the preference to use the second network code identity especially applies, in case of multiple USIM profiles, Universal Subscriber Identity Module profiles, to all USIM profiles of the at least one test mobile communication device and/or to the configuration of the at least one test mobile communication device as an in-vehicle system.

It is thereby advantageously possible according to the present invention to both assure as much as possible that the test emergency calls (or test eCalls) initiated by the at least one test mobile communication device are actually handled by the further mobile communication network, and as well that the at least one test mobile communication device is behaving according to standardized rules, especially rules relating to which mobile communication network to connect to in case of an emergency call (or eCall) even though radio coverage might be relatively bad. Typically, this is done according to the present invention by means of configuring the "preferred PLMN ID" parameter within the at least one test mobile communication device to correspond to the second network code identity. In case of multiple USIM profiles within the at least one test mobile communication device (which is typically the case or even required for ERA/GLONAS mobile communication devices or ERA/GLONAS in-vehicle systems), it is preferred that the preference to use the second network code identity applies to all such USIM profiles.

According to the present invention it is furthermore preferred that the at least one test identification identifier corresponds to at least one out of the following:
-- a signaling bit indicating that the emergency call or quality management call is a test emergency call or a quality management test call, the signaling bit especially being part of a SIP message, especially part of the header of a SIP message, or part of an XML body of a SIP message,
-- a test emergency uniform resource name indicating that the emergency call or quality management call is a test emergency call or a quality management test call,
-- an identification information having been assigned to or having been associated to the at least one test mobile communication device specifically.

Thereby, it is advantageously possible to very easily and unambiguously detect a test call and differentiate it from a non-test call (i.e. an operative call).

According to the present invention it is furthermore preferred that different test identification identifiers are assigned to different test mobile communication devices, wherein especially each test mobile communication device is assigned to a different test identification identifier, and especially wherein in case of multiple USIM profiles, Universal Subscriber Identity Module profiles, per test mobile communication device, each USIM profile of each test mobile communication device is assigned to a different test identification identifier.

Thereby, it is advantageously possible according to the present invention to provide an enhanced level of flexibility while setting up the test environment.

According to the present invention it is furthermore preferred that the detection of the use of the at least one test identification identifier is performed by the further mobile communication network by means of accessing a database entity or database functionality, especially located at or accessible via the further core network of the mobile communication network,
wherein the database entity or database functionality comprises a set of test identification identifiers, the identifiers of the set of test identification identifiers being used to perform the test of the emergency call or quality management system or the emergency call or quality management functionality using the at least one test mobile communication device.

It is thereby advantageously possible to use the test identification identifiers of the set with one or a plurality of test mobile communication devices such that complex and realistic test scenarios are possible to be implemented in an easy and straightforward manner.

According to the present invention it is furthermore preferred that, dependent on the detection of the use of the at least one test identification identifier while initiating or performing the emergency call or quality management call, the emergency call or quality management call is specifically routed, within the further mobile communication network, in order to perform the test of the emergency call or quality management system or the emergency call or quality management functionality, this specific routing especially involving at least one test public safety answering point or a plurality of test public safety answering point functionalities within or associated with the further mobile communication network.

Thereby, it is advantageously possible that normal or operative calls are not influenced by conducting the test emergency calls or by using the test emergency call or quality management system or the emergency call or quality management functionality.

According to a further preferred embodiment of the present invention, at least one mobile communication device or user equipment is an operative mobile communication device or user equipment, being used operatively with the mobile communication network or with the further mobile communication network simultaneously to the at least one test mobile communication device initiating or performing the emergency call or quality management call, the at least one mobile communication device or user equipment having an assigned operative device identification identifier and/or an operative subscription identification identifier,
wherein, in case that - regarding an operative call of the at least one mobile communication device or user equipment - the use of the at least one test identification identifier is not detected by the further mobile communication network, the call is routed, within the further mobile communication network, in a normal or operative manner, this normal or operative routing especially involving - in case that the operative call is an emergency call - one of the plurality of public safety answering points or the plurality of public safety answering point functionalities within or associated with the mobile communication network or corresponding further public safety answering points within or associated with the further mobile communication network.

Thereby, it is advantageously possible to detect "normal" emergency calls or eCalls (initiated or performed by (operative) mobile communication devices and/or (operative) user equipment also present (and active) - along with the test mobile communication device or the plurality of test mobile communication devices - within either the mobile communication network or the further mobile communication network.

According to a further preferred embodiment of the present invention, the at least one test mobile communication device is part of or corresponds to an in-vehicle-system and/or wherein the emergency call or quality management system or the emergency call or quality management functionality is an eCall emergency call system and/or a NIS ERA GLONASS emergency system.

Thereby, it is advantageously possible according to the present invention to provide the possibility to easily implement test emergency calls also for in-vehicle systems.

According to the present invention, the analysis of a piece of information is performed that is either specifically used in the packet switched IMS service core network to indicate a test packet switched emergency call or eCall and/or that is specific of the originator of this test call. Optionally, the indication of a test emergency call (or test eCall) and/or the identity of the originator can be secured by encryption data (e.g. a digital signature) to verify the identity and to validate the authorization for performing such test calls.

According to the present invention, it is preferred to include this piece of information, e.g., in a SIP header and/or in an XML body of a message (e.g. the initial SIP INVITE message) used for the emergency call or eCall. Based on the analysis of this piece of information, a specific routing can be applied in the further core network. To identify and handle these test emergency calls or test eCalls, sos-URNs (such as, e.g., "sos.ecall.manual", "sos.ecall.automaitc" or any other sos URN being defined for testing purposes) or additionally provided data to the XML body and/or SIP message associated with the test emergency call or test eCalls are analyzed. This deployed data is preferably stored in a data base which is interrogated and connected during session setup of the test emergency call or test eCall to distinguish such test calls from operational emergency calls.

In case the analysis of the relevant data or pieces of information reveals that a test identification identifier is used (i.e. is part of the defined pool (or set) of such identifiers in the database), then the call (detected as being a test call) is routed to a predefined destination, and the call is referred to as test call.

While it might be recommended to define the pool (of test identification identifiers) once (and keep it unchanged for the purposes of a specific test or a specific number of tests), it is also possible - according to an alternative variant of the present invention - to update or extend the set (or pool) of test identification identifier as necessary.

Thereby, it is advantageously possible that a detected test call is handled differently (by means of applying a specific routing) by the further mobile communication network, compared to a "normal" or operative call.

Furthermore, according to the present invention it is advantageously possible to provide a mobile communication network such that a high dynamic range is provided for different realistic test cases. Furthermore, it is especially advantageous to easily realize tests, especially for emergency call related functionalities or quality management related functionalities, at different locations, in a cost-efficient manner and with a minimized risk for a false routing of the test calls.

Furthermore, the present invention relates to a system according to claim 10.

Additionally, a program comprising a computer readable program code is disclosed which, when executed on a computer a computer and/or on a network node of a further mobile communication network and/or on a database entity or database functionality and/or in part on the network node of a further mobile communication network and/or in part on the database entity or database functionality, causes the computer and/or the network node of a further mobile communication network and/or the database entity or database functionality to perform the inventive method.

Still additionally, a computer-readable medium is disclosed, comprising instructions which when executed on a computer and/or on a network node of a further mobile communication network and/or on a database entity or database functionality and/or in part on the network node of a further mobile communication network and/or in part on the database entity or database functionality, causes the computer and/or the network node of a further mobile communication network and/or the database entity or database functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrate a mobile communication network having a plurality of base station entities and a plurality of mobile communication devices (or user equipment), as well as a further mobile communication network.
Figure 2 schematically illustrates an operative mobile communication device or user equipment being used, within the mobile communication network or within the further mobile communication network, especially - inter alia - for emergency calls, and a test mobile communication device being also used, within the further mobile communication network, especially for test emergency calls.
Figure 3 schematically illustrates a geographical area having a plurality of public safety answering points, wherein the geographical area is separated or divided in sub-areas, each sub-area having a different public safety answering point.

### DETAILED DESCRIPTION

The present invention will be described with respect to embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

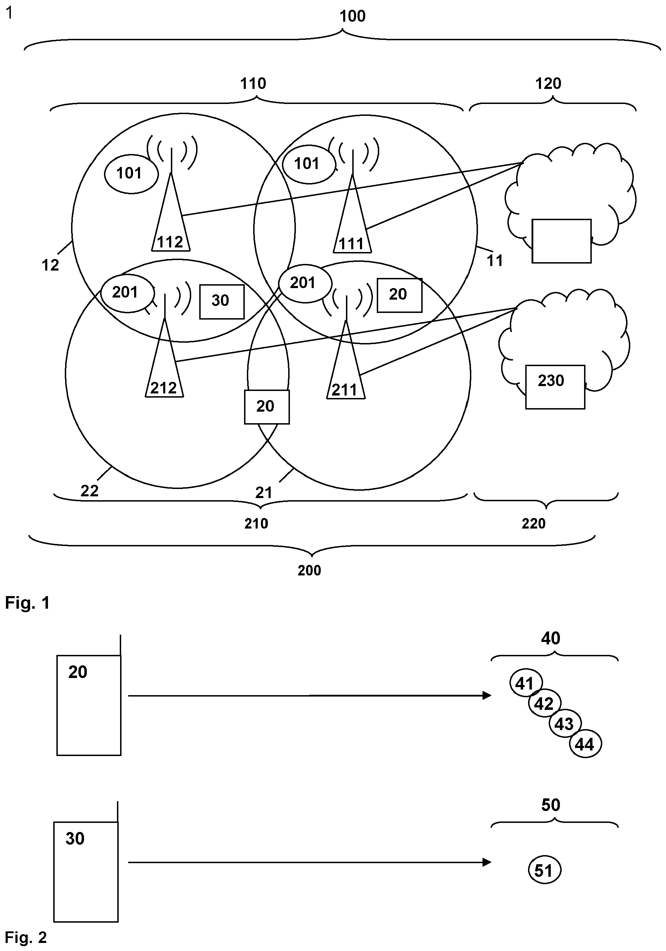

In Figure 1, a mobile communication network 100, especially a public land mobile network 100, having a plurality of base station entities 111, 112 and a plurality of mobile communication devices (or user equipment) 20, 30 is schematically shown in Figure 1, the mobile communication network 100 comprising an access network 110 and a core network 120. Additionally, a further mobile communication network 200 is schematically shown in Figure 1, having likewise a plurality of further base station entities 211, 212 and comprising a further access network 210 and a further core network 220, the plurality of mobile communication devices (or user equipment) 20, 30 shown in Figure 1 being, at least principally, able to connect or to register either to the mobile communication network 100 or to the further mobile communication network 200. Both the mobile communication network 100 and the further mobile communication network 200 are preferably cellular telecommunications networks comprising typically a plurality of network cells (or radio cells), wherein - regarding the mobile communication network 100 - two network cells (or radio cells) are represented in Figure 1 by means of reference signs 11 and 12, and - regarding the further mobile communication network 200 - two network cells (or radio cells) are represented in Figure 1 by means of reference signs 21 and 22. The mobile communication network 100 and the further mobile communication network 200 typically comprise a plurality of user equipment or mobile communication devices. The plurality of user equipment or mobile communication devices are referred to by means of reference signs 20 and 30, wherein reference sign 20 refers to an operative mobile communication device or user equipment, and reference sign 30 refers to a test mobile communication device. The access network 110 of the mobile communication network 100 comprises, in the exemplary representation of Figure 1, a first base station entity 111, serving the (first) radio cell 11, and a second base station entity 112, serving the neighbor (second) radio cell 12. The further access network 210 of the further mobile communication network 200 comprises, in the exemplary representation of Figure 1, a first further base station entity 211, serving the (first) further radio cell 21, and a second further base station entity 212, serving the neighbor (second) further radio cell 22. The base station entities 111, 112, 211, 212 are typically base stations, base transceiver stations or base station entities, e.g. a NodeB or an eNodeB or a gNB (g NodeB) or a new radio (NR) gNB base transceiver stations.

According to the present invention, a test (especially an end-to-end test) of an emergency call or quality management system or of an emergency call or quality management functionality is enabled to be conducted using the further mobile communication network 200. The mobile communication network 100 but especially the further mobile communication network 200 might be used both in an operative manner-serving operative mobile communication devices or user equipment 20 -, and for testing purposes - serving test mobile communication devices 30. In order to be able to execute (operative) emergency calls (or quality management calls), especially the mobile communication network 100 (but likewise also the further mobile communication network 200) typically comprises or is associated with a plurality of public safety answering points 40 or a plurality of public safety answering point functionalities 40 or quality management endpoints. Each of such public safety answering points 40 is typically related (or assigned) to a specific part or sub-area of the (total) geographical area served by the mobile communication network 100.

According to the present invention, at least one mobile communication device or user equipment 20 (but typically a plurality of such mobile communication devices or user equipment) is (are) operatively used within the mobile communication network 100 and with the further mobile communication network 200, hence, an operative device identification identifier and/or an operative subscription identification identifier being assigned or related to typically each of the at least one mobile communication device or user equipment 20. Additionally, at least one test mobile communication device 30 (but likewise typically a plurality of such test mobile communication devices or user equipment 30) can be connected to the further mobile communication network 200 in order to be used for performing testing of the emergency call or quality management system or the emergency call or quality management functionality. In principle, the at least one test mobile communication device 30 is also able to be connected to the mobile communication network 100 but it is typically configured to preferably connect (or register) to the further mobile communication network 200. According to the present invention, the test mobile communication device 30 (but likewise typically a plurality of such test mobile communication devices or user equipment 30) is also assigned (as each mobile communication device or user equipment within the mobile communication network 100 or the further mobile communication network 200) to a device identification identifier and/or a subscription identification identifier. According to the present invention, the (operative) device identification identifier(s) and the (operative) subscription identification identifier(s) (assigned to user equipment 20 being operatively used within the mobile communication network 100 or within the further mobile communication network 200) on the one hand, and the (operative) device identification identifier(s) and the (operative) subscription identification identifier(s) (assigned to test mobile communication devices 30 being operatively used especially within the further mobile communication network 200) on the other hand, correspond to "normal" or operative device identification identifier(s) and/or subscription identification identifier(s), i.e. such identifiers assigned to operative user equipment 20 compared to test mobile communication devices 30 do not differ specifically and/or are not treated differently in the context of either an operative emergency call or a test emergency call. According to the present invention, the differentiation between such operative emergency calls and test emergency call is done - within the further mobile communication network 200 - based on whether a test identification identifier out of a list or set of test identification identifiers is used, i.e. the use of the test identification identifier is detected by the further mobile communication network 200 and, e.g., the emergency call is treated as a test emergency call.

According to the inventive method, in a first step, the at least one test mobile communication device 30 registers with the further mobile communication network 200, using the second network code identity 201, and in a second step, subsequent to the first step, an emergency call or quality management call is initiated or performed by the at least one test mobile communication device 30, thereby using the at least one test identification identifier. Typically, a plurality of such test identification identifiers are used - such as a set or a pool of such test identification identifiers. According to the present invention, the set or pool of such test identification identifiers are stored in a database entity 230, depicted in Figure 1 schematically and exemplarily as part of the further core network 220 of the further mobile communication network 200. In case that a test emergency call (or quality management test call) is initiated or performed (in the second step, i.e. subsequent to the first step) using the at least one test identification identifier (or one of the plurality of test identification identifiers) - typically using a test mobile communication device 30 -, the use of the at least one test identification identifier is detected (in a third step, i.e. while initiating or performing the test call) by the further mobile communication network 200, and hence, it is possible to differentiate a test call from a normal or operative call within the further mobile communication network 200.

The present invention also refers to the context of the pan European eCall system and the ERA GLONASS system. In the following, both systems are referred to as eCall unless otherwise specified. These systems enhance traditional emergency call systems using emergency call numbers such as the emergency number "112" or as locally applicable (e.g.911). eCalls are either generated manually or automatically. While the first generation eCall is based on circuit switched (CS) emergency calls (Teleservice 12) and an in-band modem optimized for 2G (GSM) and 3G (UMTS) CS networks, a packet switched (PS) eCall is based and implemented on packet switched networks (e.g. 4G and 5G IP based mobile networks and in future WLAN), deploying the IP Multimedia Subsystem (IMS) emergency call framework, standardized in 3GPP, IETF and CEN When activating a voice connection with the most appropriate Public Safety Answering Point (PSAP), a minimum set of data (MSD) is sent to the PSAP. The MSD contains vital data such as the location of the vehicle using a global navigation satellite system GNSS (GLONASS, GPS, and/or Galileo), incident time and Vehicle Identification Number (VIN). Whereas circuit switched (CS) eCall is piggybacking on 112 emergency voice calls by muting the voice channel for the time needed to transmit the MSD modulated by an In-Band Modem over the voice channel, a PS eCall is based on sos-URNs distinguishing manual / automatic emergency eCalls whereas the MSD is transported via SIP signaling. The eCall domains comprise the car domain, which must be equipped with an In-Vehicle-System (IVS), a corresponding radio stack which, in case of emergency, sets up a voice call and transmits the emergency related data. In addition the IVS comprises a GNSS based positioning system to determine the current location of the vehicle. Furthermore, the eCall domains comprise a network domain to transport the data.

Regarding the inventive method, the emergency call or quality management system or the emergency call or quality management functionality is used in the presence or at least the vicinity of both the mobile communication network 100, and the further mobile communication network 200. The mobile communication network 100 is typically a public land mobile network, using a first mobile network code identity 101. , The further mobile communication network 200 is typically a private or non-public network, especially a campus network, and uses a second mobile network code identity 201, i.e. the respective mobile network code identities 101, 201 are broadcast in the served geographical area. The mobile communication network 100 comprising an access network 110, a core network 120, and one or a plurality of base station entities 111, 112, and comprises or is at least associated with (or is able to access) a plurality of operative public safety answering points 40 or a plurality of operative public safety answering point functionalities 40. Both the mobile communication network 100 and the further mobile communication network 200 are packet switched networks and the emergency call or quality management system or the emergency call or quality management functionality is configured to handle IP multimedia subsystem based packet switched emergency calls and/or session initiation protocol based packet switched emergency calls. At least one test mobile communication device 30 is, in principle, able to establish a radio link with or to register via either the mobile communication network 100 or the further mobile communication network 200 (not both at the same time), i.e. the test mobile communication device 30 is able to register to a base station entity of or associated to the access network 110, using the first mobile network code identity 101, and it is also able to register (at a different point in time) to a base station entity or a base station entity part of or related to or assigned to the further mobile communication network 200 (such as the first further base station entity 211 or the second further base station entity 212), using the second network code identity 201.

According to the present invention, the access network 110 and the further access network 210 (of the mobile communication network 100 and the further mobile communication network 200) might be coupled or cooperate such that a part of the access network infrastructure of the mobile communication network 100 is also used by the further mobile communication network 200. Hence, e.g., a base station entity of the mobile communication network 100 might also serve as a base station entity of the further mobile communication network 200 by means of also broadcasting (e.g. within one of its sectors) the second network code identity 201 (of the further mobile communication network 200). However, in the context of the present invention, it is assumed that both mobile communication networks may have their own (separate) access networks, i.e. the further mobile communication network 200 especially comprises a further access network 210 and/or a further core network 220 and/or one or a plurality of further base station entities 211, 212.

According to the present invention, performing a test of the emergency call or quality management system or the emergency call or quality management functionality, requires to define at least one test identification identifier for being used to perform the test of the emergency call or quality management system or the emergency call or quality management functionality; the at least one test mobile communication device 30 registers with the further mobile communication network 200 (i.e. using the second network code identity 201), initiates an emergency call or quality management call using the at least one test identification identifier, and the use of the at least one test identification identifier is detected by the further mobile communication network 200.

Preferably, the at least one test identification identifier corresponds, e.g., to a test emergency uniform resource name (e.g., sos.ecall.manual, sos.ecall.automatic, or other URNs defined for testing purposes) indicating that the emergency call or quality management call is a test emergency call or a quality management test call. Such a test emergency uniform resource name might either be the same for all test mobile communication devices 30 (or at least for a plurality of test mobile communication devices 30) or there might be different test identification identifiers assigned to different test mobile communication devices 30, especially each test mobile communication device 30 being assigned to a different test identification identifier (especially, in case of multiple USIM profiles per test mobile communication device 30, each USIM profile of each test mobile communication device 30 is assigned to a different test identification identifier). Alternatively to the test identification identifier corresponding to a test emergency uniform resource name (or cumulatively to the test identification identifier corresponding to a test emergency uniform resource name), the test identification identifier might be an identification information having been assigned to or having been associated to the at least one test mobile communication device 30 specifically.

Figure 2 schematically illustrates an operative mobile communication device or user equipment 20 being used, within the mobile communication network 100 or within the further mobile communication network 200, especially for emergency calls. In case of the operative mobile communication device 20 or user equipment 20 being used to conduct an (operative) emergency call, the call is routed to one of a plurality of public safety answering points 40. In Figure 2, four individual public safety answering points, a first public safety answering point 41, a second public safety answering point 42, a third public safety answering point 43, and a fourth public safety answering point 44 are schematically represented. Which individual public safety answering point is used for a specific (operative) emergency call of the operative mobile communication device or user equipment 20 typically depends on where the operative mobile communication device or user equipment 20 is located. Furthermore, figure 2 schematically illustrates a test mobile communication device 30 being used, within the further mobile communication network 200, especially for test emergency calls. Such test calls, especially test emergency calls are directed to a test public safety answering point 50 (typically associated with or comprised by the further mobile communication network 200), comprising - in the exemplary situation represented in Figure 2 - one individual test public safety answering point 51.

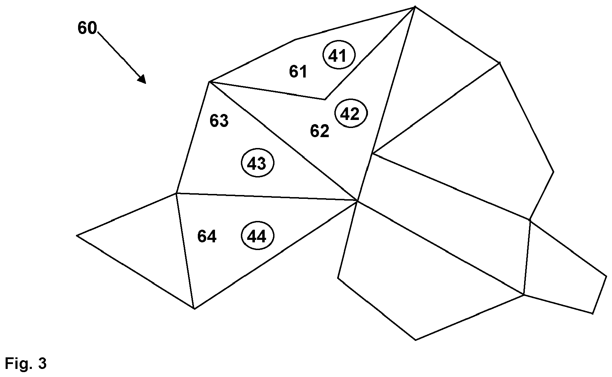

Figure 3 schematically illustrates a geographical area 60 having a plurality of public safety answering points 41, 42, 43, 44. The geographical area 60 is separated or divided in sub-areas 61, 62, 63, 64, wherein each sub-area 61, 62, 63, 64 has (or is associated with) a different (individual) public safety answering point 41, 42, 43, 44.

According to the present invention and in order to detect test emergency calls (or test eCalls) and in order to differentiate these from operative emergency calls (or eCalls) occurring within the mobile communication network 100 and/or within the further mobile communication network 200, at a first stage, the used mobile network code identity is used to differentiate the selection of the access network slice. For normal operative emergency calls (or eCalls) within the mobile communication network 100, the first mobile network code identity is used (by the user equipment 20), hence the user equipment 20 is typically not registered to the further mobile communication network 200 while initiating such calls. For test emergency calls (or test eCalls), the test mobile communication device 30 uses that second mobile network code identity 201, and, hence, the test mobile communication device 30 is registers to the second mobile communication network 200 while initiating such calls. The second network code identity 201 primarily corresponds to a public land mobile network identity, or to an uncoordinated public land mobile network identity; a network identity, NID, and/or IMSI Block Identifier might be used in addition. A closed access group identity, CAG identity, of the further mobile communication network 200might be used additionally during the registration attempt of the user equipment 20..

However, only to rely on the use of the first versus the second mobile network code identity is not sufficient in case that also the second mobile communication network 200 is used operatively (i.e. it is not solely used for testing); hence, in such a situation, there might also occur operative emergency calls within the second mobile communication network 200; of course, such operative emergency calls within the second mobile communication network 200 should either be routed (analogously to the operative emergency calls within the mobile communication network 100) to one of the plurality of public safety answering points 40 (of or connected to the mobile communication network 100) or to one or a plurality of corresponding (operative) public safety answering points of or connected to the further mobile communication network 200).

This means that such operative emergency calls within the further mobile communication network 200 also need to be differentiated from test emergency calls (or test eCalls) within likewise the further mobile communication network 200. According to the present invention, this is ensured by means of using the test identification identifier: The detection or differentiation is performed, by the further mobile communication network 200, by means of accessing the database entity 230 or database functionality 230. The database entity 230 or database functionality 230 is especially - but not necessarily - located at or accessible via the further core network 220 of the further mobile communication network 200. Alternatively (not depicted in Figure 1), the database entity 230 or database functionality 230 is not part of the further mobile communication network 200 (especially the further core network 220), but in any case, it is accessible to the further core network 220.

According to the present invention, normal or operative calls (especially within the further mobile communication network 200) are processed by the further mobile communication system 200 as if no test calls were present or performed. This means that - in case that, regarding such an operative call of the at least one mobile communication device 20 or user equipment 20, the use of the at least one test identification identifier is not detected by the further mobile communication network 200 - the call is routed, within the further mobile communication network 200, in a normal operative manner, this normal or operative routing especially involving - in case that the operative call is an (operative) emergency call - one of the plurality of public safety answering points 40 or the plurality of public safety answering point functionalities 40 within or associated with the mobile communication network 100 or corresponding further public safety answering points within or associated with the further mobile communication network 200.

However, in case that a test call shall be initiated (in the second step, subsequent to the first step), a test identification identifier is used. The use of this piece of information (being detected (especially using the database entity 230 or database functionality 230) in the third step by the further mobile communication network 200) enables the further mobile communication network 200 to differentiate between a test call and a normal or operative call within the further mobile communication network 200.

Hence, according to the present invention, the use of private or non-public networks, especially campus networks (especially deploying 4G / 5G (fourth generation / fifth generation) radio access systems and an IMS Campus Core network), is suggested for next generation eCall Type-Approval tests and quality-assurance measures. One possibility to identify and handle these test calls is to use sos-URNs (i.e. sos.ecall.manual, sos.ecall.automatic / or any other sos URN defined for testing purposes) to be analyzed as test identification identifiers. In addition thereto or alternatively, added data to the XML body or SIP message associated with the Test calls can be analyzed (likewise as test identification identifiers). The data deployed to distinguish the test emergency calls (or test eCalls) from operational emergency calls / eCalls, is stored in the data base (database entity 230 or database functionality 230) which is interrogated in the session setup. In case the analysis of these data indicates a test call (i.e. an emergency call or quality management call) and/or the originator of this test call is authorized and/or uses a test sos URN that can be found in the data base 230), the test call is routed to a test PSAP or to another entity used e.g. for periodic inspections or quality assessment. However, in case that the analysis of these data does not indicate a test call and/or the originator of this call is not authorized, then the call is operatively routed, i.e. optionally routed to an operational PSAP or dismissed.

The invention is also suitable for legally mandated periodical technical inspections or in the course of normal service interval tests carried out in workshops. In these cases or if otherwise required certificates or the like, can be included in the SIP message and if required stored in the IVS or filed in an appropriate data base.

The above described functionalities reside in the private part of the campus, i.e. the second mobile communication network 200. This is achieved by deploying a distinct (parallel) PLMN ID which may be amended a network identity, NID, and/or IMSI Block Identifier in addition. (i.e. the second network code identity 201) in parallel (or in addition) to the public network deploying an operational (Public) PLMN-ID (i.e. the first network code identity 101), e.g. by using the MOCN (Multi-Operator Core Network) functionality.

The traffic in the private layer (i.e. in the further mobile communication network 200) remains local and therefore meets the increased requirements on grade and quality-of-service of test calls. The campus zone (private network or further mobile communication network 200) is technically defined by using the second PMLN-ID (second mobile network code identity 201) which can optionally be locally be self-administrated.

Hence, according to the present invention, the test mobile communication device 30 (or in-vehicle system, IVS) initiates a test emergency call by dialing an emergency call number (e.g. the emergency call number 112 or another number as required); the in-vehicle system (or test mobile communication device) 30 selects the private radio slice of the campus network (i.e. the further mobile communication network 200 or the second network code identity 201) by always first looking up the configured PLMN IDs in the test mobile communication device (or in-vehicle system) 30 or the allied or corresponding USIM. In case the in-vehicle system module to be tested holds multiple USIM profiles, each of the profiles is typically furnished (or configured) with the configured PLMN IDs (i.e. the second network code identity 201 as the preferred PLMN ID). For actually performing a test emergency call (or test eCall), the test mobile communication device or in-vehicle system or module 30 registers in the packet switched IMS Campus Core network (i.e. the further mobile communication network 200); in case uncoordinated PLMN IDs and/or IMSI Block Identifiers are used, preconfigured NIDs or CAG IDs in the in-vehicle system 30 or the allied USIM additionally safeguard a proper registration in the appropriate IMS Campus Core network (i.e. the further mobile communication network 200). In case the test mobile communication device or in-vehicle system or module 30 to be tested holds multiple USIM profiles, each of the profiles is typically furnished with the preconfigured NIDs or CAG IDs in the test mobile communication device or in-vehicle system 30 or the allied USIM. If, for unforeseeable reasons, the registration of the second profile fails and the in-vehicle system reverts to the first profile, it is ensured that these calls remain in the IMS Campus Core network (i.e. the further mobile communication network 200) and are not connected to an operational PSAP (which would be a strong possibility if registered to the mobile communication network 100).

Being registered in the IMS Campus Core network (i.e. the further mobile communication network 200), based on the analysis of specific information (i.e. the test identification identifier) which can be included either in a SIP header and/or XML body of a message (e.g. the initial SIP INVITE message) and/or together with an identity information of the originator of this test call, the packet switched IMS campus core network (i.e. the further core network 220) identifies the test calls and routes such calls to a PSAP simulator or other entity as required (e.g. for periodic inspections or quality assessment) connected to the IMS campus core network. This analysis and assessment in the IMS campus core network is based on specific information (i.e. sos.ecall.manual, sos.ecall.automaitc / or any other sos URN defined for testing purposes) originating from a predefined data base (database entity 230 or database functionality 230) containing predefined specific information (i.e. sos.ecall.manual, sos.ecall.automaitc / or any other sos URN defined for testing purposes). In case the specific information (i.e. sos.ecall.manual, sos.ecall.automaitc / or any other sos URN defined for testing purposes) is part of the predefined data base, the call is routed to the PSAP simulator or other entity as required (e.g. for Periodic inspections or quality assessment) connected to the IMS Campus Core network. Otherwise, in case the specific information (i.e. sos.ecall.manual, sos.ecall.automaitc / or any other sos URN defined for testing purposes) is not part of the predefined data base, the call can optionally be routed to the public network (as it is interpreted as being a real (or operative) eCall / emergency call).

Optionally the indication of a test NG eCall and/or the identity of the originator (i.e. the test identification identifier used) can be secured by encryption data (e.g. a digital signature or a certificate) to verify the identity and validate the authorization for performing or initiating test next generation eCalls.

It is especially advantageous according to the present invention that - in the form of the further mobile communication network 200 - an operative mobile network can be used, and not a specific radio laboratory environment. The test NG eCalls may, in accordance with local regulation and if required for other reasons, be routed to a destination which can even be located outside the originating private part of the campus network, and the design can also be deployed for legally mandated periodical technical inspections or in the course of normal service interval tests carried out in workshops. Hence, it is advantageously possible according to the present invention (e.g. compared to solitude dedicated radio network solutions or to the core network solution involving the operational public network only) to realize a significantly more reliable separation of real (or operative) emergency calls and test calls as well as requiring less effort in the preparation of such tests, especially in case of crash tests.

## Claims

1. Method for performing a test of an emergency call system or quality management system or an emergency call functionality or quality management functionality, wherein the emergency call system or quality management system or the emergency call functionality or quality management functionality is used in the presence of both a mobile communication network (100) being a public land mobile network and using a first mobile network code identity (101), and a further mobile communication network (200) being a private or non-public network, especially a campus network, and using a second mobile network code identity (201), the mobile communication network (100) comprising an access network (110), a core network (120), and one or a plurality of base station entities (111, 112), and the mobile communication network (100) being able to access a plurality of operative public safety answering points (40) or a plurality of operative public safety answering point functionalities (40),
wherein the mobile communication network (100) and the further mobile communication network (200) are packet switched networks and the emergency call system or quality management system or the emergency call functionality or quality management functionality is configured to handle IP multimedia subsystem based packet switched emergency calls and/or session initiation protocol based packet switched emergency calls,
wherein at least one test mobile communication device (30) is configured to be able to establish a radio link with or to register via either one of
-- a base station entity associated to the access network (110), using the first mobile network code identity (101), and
-- a base station entity or a base station entity part assigned to the further mobile communication network (200), using the second network code identity (201), wherein the at least one test mobile communication device (30) is configured to preferentially use the second network code identity (201) compared to the use of the first network code identity (101),
wherein in order to perform a test of the emergency call system or quality management system or the emergency call functionality or quality management functionality, at least one test identification identifier is predefined for being used to perform the test, and the method comprises the following steps:
-- in a first step, the at least one test mobile communication device (30) registers with the further mobile communication network (200), using the second network code identity (201),
-- in a second step, subsequent to the first step, an emergency call or quality management call is initiated or performed by the at least one test mobile communication device (30), thereby using the at least one test identification identifier,
-- in a third step, subsequent to or during the second step, the use of the at least one test identification identifier - while initiating or performing the emergency call or quality management call - is detected by the further mobile communication network (200).

2. Method according to claim 1, wherein the first network code identity (101) corresponds to a public land mobile network identity, and wherein the second network code identity (201) corresponds to at least one out of the following:
-- a public land mobile network identity,
-- an uncoordinated public land mobile network identity,
-- a network identity, NID,
-- a closed access group identity, CAG identity,
of the further mobile communication network (200),
wherein the further mobile communication network (200) especially comprises a further access network (210) and/or a further core network (220) and/or one or a plurality of further base station entities (211, 212).

3. Method according to one of the preceding claims, wherein the preference to use the second network code identity (201) applies, in case of multiple USIM profiles, Universal Subscriber Identity Module profiles, to all USIM profiles of the at least one test mobile communication device (30) and/or to the configuration of the at least one test mobile communication device (30) as an in-vehicle system.

4. Method according to one of the preceding claims, wherein the at least one test identification identifier corresponds to at least one out of the following:
-- a signaling bit indicating that the emergency call or quality management call is a test emergency call or a quality management test call, the signaling bit especially being part of a SIP message, especially part of the header of a SIP message, or part of an XML body of a SIP message,
-- a test emergency uniform resource name indicating that the emergency call or quality management call is a test emergency call or a quality management test call,
-- an identification information having been assigned to or having been associated to the at least one test mobile communication device (30) specifically.

5. Method according to one of the preceding claims, wherein different test identification identifiers are assigned to different test mobile communication devices (30), wherein especially each test mobile communication device (30) is assigned to a different test identification identifier, and especially wherein in case of multiple USIM profiles, Universal Subscriber Identity Module profiles, per test mobile communication device (30), each USIM profile of each test mobile communication device (30) is assigned to a different test identification identifier.

6. Method according to one of the preceding claims, wherein the detection of the use of the at least one test identification identifier is performed by the further mobile communication network (200) by means of accessing a database entity (230) or database functionality (230), especially located at or accessible via the further core network (220) of the mobile communication network (100),
wherein the database entity (230) or database functionality (230) comprises a set of test identification identifiers, the identifiers of the set of test identification identifiers being used to perform the test of the emergency call system or quality management system or the emergency call functionality or quality management functionality using the at least one test mobile communication device (30).

7. Method according to one of the preceding claims, wherein, dependent on the detection of the use of the at least one test identification identifier while initiating or performing the emergency call or quality management call, the emergency call or quality management call is specifically routed, within the further mobile communication network (200), in order to perform the test of the emergency call system or quality management system or the emergency call functionality or quality management functionality, this specific routing especially involving at least one test public safety answering point (50) or a plurality of test public safety answering point functionality (50) within or associated with the further mobile communication network (200).

8. Method according to one of the preceding claims, wherein at least one mobile communication device (20) or user equipment (20) is an operative mobile communication device (20) or user equipment (20), being used operatively with the mobile communication network (100) or with the further mobile communication network (200) simultaneously to the at least one test mobile communication device (30) initiating or performing the emergency call or quality management call, the at least one mobile communication device (20) or user equipment (20) having an assigned operative device identification identifier and/or an operative subscription identification identifier,
wherein, in case that - regarding an operative call of the at least one mobile communication device (20) or user equipment (20) - the use of the at least one test identification identifier is not detected by the further mobile communication network (200), the call is routed, within the further mobile communication network (200), in a normal or operative manner, this normal or operative routing especially involving - in case that the operative call is an emergency call - one of the plurality of public safety answering points (40) or the plurality of public safety answering point functionalities (40) within or associated with the mobile communication network (100) or corresponding further public safety answering points within or associated with the further mobile communication network (200).

9. Method according to one of the preceding claims, wherein the at least one test mobile communication device (30) is part of or corresponds to an in-vehicle-system and/or wherein the emergency call system or quality management system or the emergency call functionality or quality management functionality is an eCall emergency call system and/or a NIS ERA GLONASS emergency system.

10. System for performing a test of an emergency call system or quality management system or an emergency call functionality or quality management functionality,
wherein the emergency call system or quality management system or the emergency call functionality or quality management functionality is used in the presence of both a mobile communication network (100) being a public land mobile network and using a first mobile network code identity (101), and a further mobile communication network (200) being a private or non-public network, especially a campus network, and using a second -mobile network code identity (201), the system comprising at least the further mobile communication network (200) and at least one test mobile communication device (30), the mobile communication network (100) comprising an access network (110), a core network (120), and one or a plurality of base station entities (111, 112), and the mobile communication network (100) being able to access a plurality of operative public safety answering points (40) or a plurality of operative public safety answering point functionalities (40),
wherein the mobile communication network (100) and the further mobile communication network (200) are packet switched networks and the emergency call system or quality management system or the emergency call functionality or quality management functionality is configured to handle IP multimedia subsystem based packet switched emergency calls and/or session initiation protocol based packet switched emergency calls,
wherein the at least one test mobile communication device (30) is configured to be able to establish a radio link with or to register via either one of
-- a base station entity associated to the access network (110), using the first mobile network code identity (101), and
-- a base station entity or a base station entity part assigned to the further mobile communication network (200), using the second network code identity (201), wherein the at least one test mobile communication device (30) is configured to preferentially use the second network code identity (201) compared to the use of the first network code identity (101),
wherein in order to perform a test of the emergency call system or quality management system or the emergency call functionality or quality management functionality, at least one test identification identifier is predefined for being used to perform the test, the system is configured such that:
-- the at least one test mobile communication device (30) is configured to register with the further mobile communication network (200), using the second network code identity (201),
-- the at least one test mobile communication device (30) is configured to initiate or perform an emergency call or quality management call, thereby using the at least one test identification identifier,
-- the further mobile communication network (200) is configured to detect the use of the at least one test identification identifier - while initiating or performing the emergency call or quality management call -.

## Patentansprüche

1. Verfahren zum Durchführen eines Tests eines Notrufsystems oder Qualitätsmanagementsystems oder einer Notruffunktionalität oder Qualitätsmanagementfunktionalität, wobei das Notrufsystem oder Qualitätsmanagementsystem oder die Notruffunktionalität oder Qualitätsmanagementfunktionalität in Gegenwart sowohl eines Mobilkommunikationsnetzes (100), das ein öffentliches terrestrisches Mobilfunknetz ist und eine erste Mobilfunknetzcode-Identität (101) verwendet, als auch eines weiteren Mobilkommunikationsnetzes (200), das ein privates oder nicht-öffentliches Netz, insbesondere ein Campusnetz, ist und eine zweite Mobilfunknetzcode-Identität (201) verwendet, verwendet wird, wobei das Mobilkommunikationsnetz (100) ein Zugangsnetz (110), ein Kernnetz (120) ein Kernnetz (120) und eine oder mehrere Basisstationseinheiten (111, 112) umfasst, und das Mobilkommunikationsnetz (100) dazu eingerichtet ist, auf mehrere operative Notrufzentralen (40) oder mehrere operative Notrufzentralenfunktionalitäten (40) zuzugreifen, wobei das Mobilkommunikationsnetz (100) und das weitere Mobilkommunikationsnetz (200) paketvermittelte Netze sind und das Notrufsystem oder Qualitätsmanagementsystem oder die Notruffunktionalität oder Qualitätsmanagementfunktionalität dafür ausgebildet ist, IP-Multimedia-Subsystem-basierte paketvermittelte Notrufe und/oder Sitzungsinitiierungsprotokoll-basierte paketvermittelte Notrufe zu verarbeiten,
wobei mindestens eine Test-Mobilkommunikationsvorrichtung (30) so ausgebildet ist, dass sie dazu eingerichtet ist, eine Funkverbindung zu einem von Folgendem herzustellen oder sich über eines von Folgendem zu registrieren:
- eine Basisstationsentität, die dem Zugangsnetz (110) zugeordnet ist, unter Verwendung der ersten Mobilfunknetzcode-Identität (101), und
- eine Basisstationsentität oder ein Basisstationsentitätsteil, die bzw. der dem weiteren Mobilkommunikationsnetz (200) zugeordnet ist, unter Verwendung der zweiten Netzcode-Identität (201), wobei die mindestens eine Test-Mobilkommunikationsvorrichtung (30) so ausgebildet ist, dass sie im Vergleich zur Verwendung der ersten Netzcode-Identität (101) bevorzugt die zweite Netzcode-Identität (201) verwendet,
wobei zum Zweck der Durchführung eines Tests des Notrufsystems oder Qualitätsmanagementsystems oder der Notruffunktionalität oder Qualitätsmanagementfunktionalität mindestens eine Testidentifizierungskennung vordefiniert wird, um zur Durchführung des Tests verwendet zu werden, und das Verfahren die folgenden Schritte umfasst:
- in einem ersten Schritt registriert sich die mindestens eine Test-Mobilkommunikationsvorrichtung (30) unter Verwendung der zweiten Netzcode-Identität (201) bei dem weiteren Mobilkommunikationsnetz (200),
- in einem zweiten Schritt, im Anschluss an den ersten Schritt, wird ein Notruf oder ein Qualitätsmanagementruf durch die mindestens eine Test-Mobilkommunikationsvorrichtung (30) initiiert oder durchgeführt, wobei die mindestens eine Testidentifikationskennung verwendet wird,
- in einem dritten Schritt, im Anschluss an den zweiten Schritt oder während des zweiten Schritts, wird die Verwendung der mindestens einen Testidentifikationskennung - während der Initiierung oder Durchführung des Notrufs oder des Qualitätsmanagement-Rufs - durch das weitere Mobilkommunikationsnetz (200) detektiert.

2. Verfahren nach Anspruch 1, wobei die erste Netzcode-Identität (101) einer Öffentlichen-Terrestrischen-Mobilfunknetz-Identität entspricht und wobei die zweite Netzcode-Identität (201) mindestens einem von
- einer Öffentlichen-Terrestrischen-Mobilfunknetz-Identität,
- einer unkoordinierten Öffentlichen-Terrestrischen-Mobilfunknetz-Identität,
- einer Netzidentität (Network Identity, NID),
- einer Geschlossenen-Zugangsgruppen-Identität (Closed Access Group, CAG-Identität)
des weiteren Mobilkommunikationsnetzes (200) entspricht, wobei das weitere Mobilkommunikationsnetz (200) insbesondere ein weiteres Zugangsnetz (210) und/oder ein weiteres Kernnetz (220) und/oder eine oder mehrere weitere Basisstationsentitäten (211, 212) umfasst.

3. Verfahren nach einem der vorangehenden Ansprüche, wobei die Präferenz der Verwendung der zweiten Netzcode-Identität (201) im Fall mehrerer USIM-Profile (Universal Subscriber Identity Module-Profile) für alle USIM-Profile der mindestens einen Test-Mobilkommunikationsvorrichtung (30) und/oder für die Konfiguration der mindestens einen Test-Mobilkommunikationsvorrichtung (30) als ein fahrzeuginternes System gilt.

4. Verfahren nach einem der vorangehenden Ansprüche, wobei der mindestens eine Testidentifikationskennung mindestens einem von Folgendem entspricht:
- einem Zeichengabebit, das angibt, dass es sich bei dem Notruf oder Qualitätsmanagementruf um einen Testnotruf oder einen Qualitätsmanagementtestruf handelt, wobei das Zeichengabebit insbesondere Teil einer SIP-Nachricht, insbesondere Teil des Headers einer SIP-Nachricht, oder Teil eines XML-Haupttextes einer SIP-Nachricht ist,
- einem einheitlichen Testnotfall-Ressourcennamen, der angibt, dass es sich bei dem Notruf oder Qualitätsmanagementruf um einen Testnotruf oder einen Qualitätsmanagementtestruf handelt,
- eine Identifikationsinformation, die speziell der mindestens einen Test-Mobilkommunikationsvorrichtung (30) zugewiesen oder speziell mit der mindestens einen Test-Mobilkommunikationsvorrichtung (30) verknüpft wurde.

5. Verfahren nach einem der vorangehenden Ansprüche, wobei verschiedenen Test-Mobilkommunikationsvorrichtungen (30) verschiedene Testidentifizierungskennungen zugewiesen werden, wobei insbesondere jede Test-Mobilkommunikationsvorrichtung (30) einer anderen Testidentifizierungskennung zugewiesen wird und wobei insbesondere im Fall mehrerer USIM-Profile (Universal Subscriber Identity Module-Profile) pro Test-Mobilkommunikationsvorrichtung (30) jedes USIM-Profil jeder Test-Mobilkommunikationsvorrichtung (30) einer anderen Testidentifizierungskennung zugewiesen wird.

6. Verfahren nach einem der vorangehenden Ansprüche, wobei die Detektion der Verwendung der mindestens einen 5 Testidentifikationskennung durch das weitere Mobilkommunikationsnetz (200) mittels Zugriff auf eine Datenbankentität (230) oder Datenbankfunktionalität (230) erfolgt, die sich insbesondere in dem weiteren Kernnetz (220) des Mobilkommunikationsnetzes (100) befindet oder über das weitere Kernnetz (220) des Mobilkommunikationsnetzes (100) zugänglich ist,
wobei die Datenbankentität (230) oder Datenbankfunktionalität (230) einen Satz von Testidentifikationskennungen umfasst, wobei die Kennungen des Satzes von Testidentifikationskennungen verwendet werden, um den Test des Notrufsystems oder Qualitätsmanagementsystems oder der Notruffunktionalität oder Qualitätsmanagementfunktionalität unter Verwendung der mindestens einen Test-Mobilkommunikationsvorrichtung (30) durchzuführen.

7. Verfahren nach einem der vorangehenden Ansprüche, wobei in Abhängigkeit von der Detektion der Verwendung der mindestens einen Testidentifizierungskennung während des Initiierens oder Durchführens des Notrufs oder Qualitätsmanagementrufs der Notruf oder Qualitätsmanagementruf speziell innerhalb des weiteren Mobilkommunikationsnetzes (200) geroutet wird, um den Test des Notrufsystems oder Qualitätsmanagementsystems oder der Notruffunktionalität oder Qualitätsmanagementfunktionalität durchzuführen, wobei diese spezielle Routung insbesondere mindestens eine Test-Notrufzentrale (50) oder mehrere Test-Notrufzentralen (50), die sich innerhalb des weiteren Mobilkommunikationsnetzes (200) befinden oder mit dem weiteren Mobilkommunikationsnetz (200) verknüpft sind, einbezieht.

8. Verfahren nach einem der vorangehenden Ansprüche, wobei mindestens eine Mobilkommunikationsvorrichtung (20) oder Benutzerausrüstung (20) eine operative Mobilkommunikationsvorrichtung (20) oder Benutzerausrüstung (20) ist, die operativ mit dem Mobilkommunikationsnetz (100) oder mit dem weiteren Mobilkommunikationsnetz (200) gleichzeitig mit der mindestens einen Test-Mobilkommunikationsvorrichtung (30), die den Notruf oder Qualitätsmanagementruf initiiert oder durchführt, verwendet wird, wobei die mindestens eine Mobilkommunikationsvorrichtung (20) oder Benutzerausrüstung (20) eine zugewiesene operative Vorrichtungsidentifikationskennung und/oder eine operative Teilnehmeridentifikationskennung aufweist,
wobei für den Fall, dass -in Bezug auf einen operativen Ruf der mindestens einen Mobilkommunikationsvorrichtung (20) oder Benutzervorrichtung (20) - die Verwendung der mindestens einen Testidentifikationskennung nicht durch das weitere Mobilkommunikationsnetz (200) detektiert wird, der Ruf innerhalb des weiteren Mobilkommunikationsnetzes (200) auf eine normale oder operative Weise geroutet wird, wobei diese normale oder operative Routung insbesondere - für den Fall, dass der operative Ruf ein Notruf ist - eine der mehreren Notrufzentralen (40) oder der mehreren Notrufzentralenfunktionalitäten (40), die sich innerhalb des Mobilkommunikationsnetzes (100) befinden oder mit dem Mobilkommunikationsnetz (100) verknüpft sind, oder entsprechende weitere Notrufzentralen, die sich innerhalb des weiteren Mobilkommunikationsnetzes (100) befinden oder mit dem weiteren Mobilkommunikationsnetz (100) verknüpft sind, einbezieht.

9. Verfahren nach einem der vorangehenden Ansprüche, wobei die mindestens eine Test-Mobilkommunikationsvorrichtung (30) 7 Teil eines fahrzeuginternen Systems ist oder einem fahrzeuginternen System entspricht und/oder wobei das Notrufsystem oder Qualitätsmanagementsystem oder die Notruffunktionalität oder Qualitätsmanagementfunktionalität ein eCall-Notrufsystem und/oder ein NIS ERA GLONASS-Notrufsystem ist.

10. System zum Durchführen eines Tests eines Notrufsystems oder Qualitätsmanagementsystems oder einer Notruffunktionalität oder Qualitätsmanagementfunktionalität, wobei das Notrufsystem oder Qualitätsmanagementsystem oder die Notruffunktionalität oder Qualitätsmanagementfunktionalität in Gegenwart sowohl eines Mobilkommunikationsnetzes (100), das ein öffentliches terrestrisches Mobilfunknetz ist und eine erste Mobilfunknetzcode-Identität (101) verwendet, als auch eines weiteren Mobilkommunikationsnetzes (200), das ein privates oder nicht-öffentliches Netz, insbesondere ein Campusnetz, ist und eine zweite Mobilfunknetzcode-Identität (201) verwendet, verwendet wird, wobei das System mindestens das weitere Mobilkommunikationsnetz (200) und mindestens ein Test-Mobilkommunikationsvorrichtung (30) umfasst, wobei das Mobilkommunikationsnetz (100) ein Zugangsnetz (110), ein Kernnetz (120) und eine oder mehrere Basisstationsentitäten (111, 112) umfasst, und das Mobilkommunikationsnetz (100) dazu eingerichtet ist, auf mehrere operative Notrufzentralen (40) oder mehrere operative Notrufzentralen-Funktionalitäten (40) zuzugreifen,
wobei das Mobilkommunikationsnetz (100) und das weitere Mobilkommunikationsnetz (200) paketvermittelte Netze sind und das Notrufsystem oder Qualitätsmanagementsystem oder die Notruffunktionalität oder Qualitätsmanagementfunktionalität dafür ausgebildet ist, IP-Multimedia-Subsystem-basierte paketvermittelte Notrufe und/oder Sitzungsinitiierungsprotokoll-basierte paketvermittelte Notrufe zu verarbeiten,
wobei die mindestens eine Test-Mobilkommunikationsvorrichtung (30) so ausgebildet ist, dass sie dazu eingerichtet ist, eine Funkverbindung zu einem von Folgendem herzustellen oder sich über eines von Folgendem zu registrieren:
- eine Basisstationsentität, die dem Zugangsnetz (110) zugeordnet ist, unter Verwendung der ersten Mobilfunknetzcode-Identität (101), und
- eine Basisstationsentität oder ein Basisstationsentitätsteil, die bzw. der dem weiteren Mobilkommunikationsnetz (200) zugeordnet ist, unter Verwendung der zweiten Netzcode-Identität (201), wobei die mindestens eine Test-Mobilkommunikationsvorrichtung (30) so ausgebildet ist, dass sie im Vergleich zur Verwendung der ersten Netzcode-Identität (101) bevorzugt die zweite Netzcode-Identität (201) verwendet,
wobei zum Zweck der Durchführung eines Tests des Notrufsystems oder Qualitätsmanagementsystems oder der Notruffunktionalität oder Qualitätsmanagementfunktionalität mindestens eine Testidentifizierungskennung vordefiniert wird, um zur Durchführung des Tests verwendet zu werden, wobei das System so ausgebildet ist, dass:
- die mindestens eine Test-Mobilkommunikationsvorrichtung (30) so ausgebildet ist, dass sie sich unter Verwendung der zweiten Netzcode-Identität (201) bei dem weiteren Mobilkommunikationsnetz (200) registriert,
- die mindestens eine Test-Mobilkommunikationsvorrichtung (30) so ausgebildet ist, dass sie einen Notruf oder Qualitätsmanagementruf initiiert oder durchführt, wobei die mindestens eine Testidentifikationskennung verwendet wird,
- das weitere Mobilkommunikationsnetz (200) so ausgebildet ist, dass es die Verwendung der mindestens einen Testidentifikationskennung detektiert, während es den Notruf oder Qualitätsmanagementruf initiiert oder durchführt.

## Revendications

1. Procédé pour effectuer un test d'un système d'appel d'urgence ou d'un système de gestion de la qualité ou d'une fonctionnalité d'appel d'urgence ou d'une fonctionnalité de gestion de la qualité, dans lequel le système d'appel d'urgence ou le système de gestion de la qualité ou la fonctionnalité d'appel d'urgence ou la fonctionnalité de gestion de la qualité est utilisé(e) en présence à la fois d'un réseau de communication mobile (100) qui est un réseau mobile terrestre public et en utilisant une première identité de code de réseau mobile (101), et d'un autre réseau de communication mobile (200) qui est un réseau privé ou non public, en particulier un réseau de campus, et en utilisant une deuxième identité de code de réseau mobile (201), le réseau de communication mobile (100) comprenant un réseau d'accès (110), un réseau central (120), et une ou une pluralité d'entités de station de base (111, 112), et le réseau de communication mobile (100) pouvant accéder à une pluralité de centres téléphoniques de sécurité publique opérationnels (40) ou à une pluralité de fonctionnalités de centres téléphoniques de sécurité publique opérationnels (40),
dans lequel le réseau de communication mobile (100) et l'autre réseau de communication mobile (200) sont des réseaux à commutation de paquets et le système d'appel d'urgence ou le système de gestion de la qualité ou la fonctionnalité d'appel d'urgence ou la fonctionnalité de gestion de la qualité est configuré(e) pour traiter des appels d'urgence à commutation de paquets basés sur le sous-système multimédia IP et/ou des appels d'urgence à commutation de paquets basés sur le protocole d'initiation de session,
dans lequel au moins un dispositif de communication mobile de test (30) est configuré pour pouvoir établir une liaison radio avec l'un des éléments suivants ou s'enregistrer via l'un de ceux-ci :
- une entité de station de base associée au réseau d'accès (110), en utilisant la première identité de code de réseau mobile (101), et
- une entité de station de base ou une partie d'entité de station de base affectée à l'autre réseau de communication mobile (200), en utilisant la deuxième identité de code de réseau (201), dans lequel l'au moins un dispositif de communication mobile de test (30) est configuré pour utiliser de manière préférentielle la deuxième identité de code de réseau (201) par rapport à l'utilisation de la première identité de code de réseau (101),
dans lequel, afin d'effectuer un test du système d'appel d'urgence ou du système de gestion de la qualité ou de la fonctionnalité d'appel d'urgence ou de la fonctionnalité de gestion de la qualité, au moins un identificateur d'identification de test est prédéfini pour être utilisé pour effectuer le test, et le procédé comprend les étapes suivantes :
- dans une première étape, l'au moins un dispositif de communication mobile de test (30) s'enregistre auprès de l'autre réseau de communication mobile (200), en utilisant la deuxième identité de code de réseau (201),
- dans une deuxième étape, consécutive à la première étape, un appel d'urgence ou un appel de gestion de la qualité est initié ou effectué par l'au moins un dispositif de communication mobile de test (30), en utilisant ainsi l'au moins un identificateur d'identification de test,
- dans une troisième étape, consécutive à la deuxième étape ou pendant celle-ci, l'utilisation de l'au moins un identificateur d'identification de test - pendant l'initiation ou l'exécution de l'appel d'urgence ou de l'appel de gestion de qualité - est détectée par l'autre réseau de communication mobile (200).

2. Procédé selon la revendication 1, dans lequel la première identité de code de réseau (101) correspond à une identité de réseau mobile terrestre public, et dans lequel la deuxième identité de code de réseau (201) correspond à au moins l'un des éléments suivants :
- une identité de réseau mobile terrestre public,
- une identité de réseau mobile terrestre public non coordonnée,
- une identité de réseau, NID,
- une identité de groupe d'accès fermé, identité CAG, de l'autre réseau de communication mobile (200),
dans lequel l'autre réseau de communication mobile (200) comprend notamment un autre réseau d'accès (210) et/ou un autre réseau central (220) et/ou une ou plusieurs autres entités de station de base (211, 212).

3. Procédé selon l'une des revendications précédentes, dans lequel la préférence de l'utilisation de la deuxième identité de code de réseau (201) s'applique, en cas de multiples profils de module d'identité universelle d'abonné, profils USIM, à tous les profils USIM de l'au moins un dispositif de communication mobile de test (30) et/ou à la configuration de l'au moins un dispositif de communication mobile de test (30) en tant que système embarqué.

4. Procédé selon l'une des revendications précédentes, dans lequel l'au moins un identificateur d'identification de test correspond à au moins l'un des éléments suivants :
- un bit de signalisation indiquant que l'appel d'urgence ou l'appel de gestion de la qualité est un appel d'urgence de test ou un appel de test de gestion de la qualité, le bit de signalisation faisant notamment partie d'un message SIP, en particulier de l'en-tête d'un message SIP, ou d'un corps XML d'un message SIP,
- un nom uniforme de ressource d'urgence de test indiquant que l'appel d'urgence ou l'appel de gestion de la qualité est un appel d'urgence de test ou un appel de test de gestion de la qualité,
- une information d'identification ayant été attribuée ou ayant été associée spécifiquement à l'au moins un dispositif de communication mobile de test (30).

5. Procédé selon l'une des revendications précédentes, dans lequel différents identificateurs d'identification de test sont attribués à différents dispositifs de communication mobiles de test (30), dans lequel en particulier chaque dispositif de communication mobile de test (30) est affecté à un identificateur d'identification de test différent, et en particulier dans lequel en cas de multiples profils de module d'identité universelle d'abonné, profils USIM, par dispositif de communication mobile de test (30), chaque profil USIM de chaque dispositif de communication mobile de test (30) est attribué à un identificateur d'identification de test différent.

6. Procédé selon l'une des revendications précédentes, dans lequel la détection de l'utilisation de l'au moins un identificateur d'identification de test est effectuée par l'autre réseau de communication mobile (200) au moyen de l'accès à une entité de base de données (230) ou à une fonctionnalité de base de données (230), en particulier située au niveau de l'autre réseau central (220) du réseau de communication mobile (100) ou accessible via celui-ci, dans lequel l'entité de base de données (230) ou la fonctionnalité de base de données (230) comprend un ensemble d'identificateurs d'identification de test, les identificateurs de l'ensemble d'identificateurs d'identification de test étant utilisés pour effectuer le test du système d'appel d'urgence ou du système de gestion de la qualité ou de la fonctionnalité d'appel d'urgence ou de la fonctionnalité de gestion de la qualité en utilisant l'au moins un dispositif de communication mobile de test (30) .

7. Procédé selon l'une des revendications précédentes, dans lequel, en fonction de la détection de l'utilisation de l'au moins un identificateur d'identification de test lors de l'initiation ou de l'exécution de l'appel d'urgence ou de l'appel de gestion de la qualité, l'appel d'urgence ou l'appel de gestion de la qualité est acheminé spécifiquement, au sein de l'autre réseau de communication mobile (200), afin d'effectuer le test du système d'appel d'urgence ou du système de gestion de la qualité ou de la fonctionnalité d'appel d'urgence ou de la fonctionnalité de gestion de la qualité, cet acheminement spécifique impliquant notamment au moins un centre téléphonique de sécurité publique de test (50) ou une pluralité de fonctionnalités de centres téléphoniques de sécurité publique de test (50) au sein de l'autre réseau de communication mobile (200) ou associés à celui-ci.

8. Procédé selon l'une des revendications précédentes, dans lequel au moins un dispositif de communication mobile (20) ou un équipement utilisateur (20) est un dispositif de communication mobile (20) ou un équipement utilisateur (20) opérationnel, utilisé de manière opérationnelle avec le réseau de communication mobile (100) ou avec l'autre réseau de communication mobile (200) simultanément à l'au moins un dispositif de communication mobile de test (30) initiant ou effectuant l'appel d'urgence ou l'appel de gestion de la qualité, l'au moins un dispositif de communication mobile (20) ou équipement utilisateur (20) ayant un identificateur d'identification de dispositif opérationnel et/ou un identificateur d'identification d'abonnement opérationnel attribué,
dans lequel, dans le cas où - concernant un appel opérationnel de l'au moins un dispositif de communication mobile (20) ou équipement utilisateur (20) - l'utilisation de l'au moins un identificateur d'identification de test n'est pas détectée par l'autre réseau de communication mobile (200), l'appel est acheminé, au sein de l'autre réseau de communication mobile (200), d'une manière normale ou opérationnelle, cet acheminement normal ou opérationnel impliquant en particulier - dans le cas où l'appel opérationnel est un appel d'urgence - l'un de la pluralité de centres téléphoniques de sécurité publique (40) ou l'une de la pluralité de fonctionnalités de centres téléphoniques de sécurité publique (40) au sein du réseau de communication mobile (100) ou associés à celui-ci ou d'autres centres téléphoniques de sécurité publique correspondants au sein de l'autre réseau de communication mobile (200) ou associés à celui-ci.

9. Procédé selon l'une des revendications précédentes, dans lequel l'au moins un dispositif de communication mobile de test (30) fait partie ou correspond à un système embarqué et/ou dans lequel le système d'appel d'urgence ou le système de gestion de la qualité ou la fonctionnalité d'appel d'urgence ou la fonctionnalité de gestion de la qualité est un système d'appel d'urgence eCall et/ou un système d'urgence NIS ERA GLONASS.

10. Système pour effectuer un test d'un système d'appel d'urgence ou d'un système de gestion de la qualité ou d'une fonctionnalité d'appel d'urgence ou d'une fonctionnalité de gestion de la qualité, dans lequel le système d'appel d'urgence ou le système de gestion de la qualité ou la fonctionnalité d'appel d'urgence ou la fonctionnalité de gestion de la qualité est utilisé(e) en présence à la fois d'un réseau de communication mobile (100) qui est un réseau mobile terrestre public et en utilisant une première identité de code de réseau mobile (101), et d'un autre réseau de communication mobile (200) qui est un réseau privé ou non public, en particulier un réseau de campus, et en utilisant une deuxième identité de code de réseau mobile (201), le système comprenant au moins l'autre réseau de communication mobile (200) et au moins un dispositif de communication mobile de test (30), le réseau de communication mobile (100) comprenant un réseau d'accès (110), un réseau central (120), et une ou une pluralité d'entités de station de base (111, 112), et le réseau de communication mobile (100) pouvant accéder à une pluralité de centres téléphoniques de sécurité publique opérationnels (40) ou à une pluralité de fonctionnalités de centres téléphoniques de sécurité publique opérationnels (40), dans lequel le réseau de communication mobile (100) et l'autre réseau de communication mobile (200) sont des réseaux à commutation de paquets et le système d'appel d'urgence ou le système de gestion de la qualité ou la fonctionnalité d'appel d'urgence ou la fonctionnalité de gestion de la qualité est configuré(e) pour traiter des appels d'urgence à commutation de paquets basés sur le sous-système multimédia IP et/ou des appels d'urgence à commutation de paquets basés sur le protocole d'initiation de session,
dans lequel l'au moins un dispositif de communication mobile de test (30) est configuré pour pouvoir établir une liaison radio avec l'un des éléments suivants ou s'enregistrer via l'un de ceux-ci :
- une entité de station de base associée au réseau d'accès (110), en utilisant la première identité de code de réseau mobile (101), et
- une entité de station de base ou une partie d'entité de station de base affectée à l'autre réseau de communication mobile (200), en utilisant la deuxième identité de code de réseau (201), dans lequel l'au moins un dispositif de communication mobile de test (30) est configuré pour utiliser de manière préférentielle la deuxième identité de code de réseau (201) par rapport à l'utilisation de la première identité de code de réseau (101),
dans lequel, afin d'effectuer un test du système d'appel d'urgence ou du système de gestion de la qualité ou de la fonctionnalité d'appel d'urgence ou de la fonctionnalité de gestion de la qualité, au moins un identificateur d'identification de test est prédéfini pour être utilisé pour effectuer le test, le système est configuré de telle sorte que :
- l'au moins un dispositif de communication mobile de test (30) est configuré pour s'enregistrer auprès de l'autre réseau de communication mobile (200), en utilisant la deuxième identité de code de réseau (201),
- l'au moins un dispositif de communication mobile de test (30) est configuré pour initier ou effectuer un appel d'urgence ou un appel de gestion de la qualité, en utilisant ainsi l'au moins un identificateur d'identification de test,
- l'autre réseau de communication mobile (200) est configuré pour détecter l'utilisation de l'au moins un identificateur d'identification de test - tout en initiant ou en effectuant l'appel d'urgence ou l'appel de gestion de la qualité.
